# EUROPEAN PATENT SPECIFICATION

(11) **EP 4 204 713 B1**
(45) Date of publication and mention of the grant of the patent: **11.11.2026**
(21) Application number: 21763233.0
(22) Date of filing: 25.08.2021
(51) Int. Cl.: F16H 3/72, H02P 1/16, F02C 9/00

(54) **DRIVE ARRANGEMENT FOR A MECHANICAL DRIVEN EQUIPMENT**
ANTRIEBSANORDNUNG FÜR EINE MECHANISCH ANGETRIEBENE EINRICHTUNG
AGENCEMENT D'ENTRAÎNEMENT POUR ÉQUIPEMENT MÉCANIQUE ENTRAÎNÉ

(30) Priority: 28.08.2020 IT 202000020593
(43) Date of publication of application: 05.07.2023
(73) Proprietor: Nuovo Pignone S.r.l., 50100 Firenze (FI) (IT)
(72) Inventor: MARAGIOGLIO, Gaspare, 50127 Florence (IT)
(74) Representative: Novagraaf Group
(86) International application number: PCT/EP2021/025319
(87) International publication number: WO 2022/042883

(56) References cited:
- DE-A1- 102015 006 084
- US-A1- 2009 291 803
- US-A1- 2014 378 257
- US-B1- 6 715 291
- US-B2- 7 014 586

## Description

### TECHNICAL FIELD

The present invention concerns a drive arrangement to drive a mechanical driven equipment in a train system.

### BACKGROUND ART

Mechanical driven equipment or loads, such as pumps or compressors, are driven by appropriate high-power sources. Among these power sources can be mentioned gas turbines, steam turbines, expanders, high-power diesel and gas engines or electric motors.

In general, there are available in the market systems, called "trains", "train systems" or similar, where a power source drives a load, such as one or more compressors, pumps or ship propellers, through transmission equipment. More specifically, the transmission of the power from the power source to the mechanically driven equipment (or load) takes place through an input shaft, which the power source is connected to, an output shaft, connected to the load L, and a gearbox to change the transmission ratio between the speed of the input shaft (namely of the power source) and the output shaft (namely of the load). Hereafter, for ease of reference only, a system comprising a power source, a gearbox, and a load, e.g. a compressor, may be referred to as a "train", a "train system" or a "train plant".

The gearbox can be of different types, and in particular, it can be fixed or variable gear ratio type.

In general, changing the speed of driven equipment in several circumstances is necessary. Therefore, if a fixed transmission ratio is used in a system, it is usually required that the driver equipment, i.e. the power source, is capable of changing the rotational speed of the transmission input shaft. In this case, the only possible drivers or power sources can be a Variable Frequency Drive (VFD) electric motor, a double-shaft gas turbine, a steam turbine, an expander, a diesel engine or a gas engine, for instance. In fact, these kinds of power sources can vary the speed. However, these systems turn out to be complex from the technical point of view, since it is necessary to equip the plant with large frequency converters, for electric motors, or to increase the mechanical complexity of power sources.

Additionally, in case the driver is an electric motor with VFD, the train system can experience sub-synchronous torsional interactions, which can be transferred to other train systems, such as generator drive or mechanical drive trains, through network disturbances. In this case the train system is not optimized in terms of CAPEX (footprint and weight) and OPEX (efficiency).

If a variable-transmission-ratio gearbox is used, a fixed speed electric motor or a single-shaft shaft gas turbine can be used as power source. Train systems equipped with variable gear ratio gearbox usually comprise epicyclic type or derived gearboxes. This type of gearboxes generally includes an annulus wheel, a plurality of star wheels, meshed with the annulus wheel, held together by a star carrier, and a sun wheel, in its turn meshed with the star wheels. The transmission ratio of a variable gear ratio epicyclic gearbox can be varied by varying the rotational speed of the star carrier with respect to the annulus wheel or vice versa, by varying the rotational speed of the annulus wheel with respect to the star carrier, respectively assuming that the transmission input shaft is coupled to the annulus wheel or to the star carrier. The use of a variable gear ratio gearbox allows for greater design flexibility. As alternative to the epicyclic type gear a layshaft gear arrangement can be used to realize a variable-transmission-ratio gearbox, this including an input sun wheel, a plurality of star wheels, meshed with the input sun wheel, held together by a star carrier, and an output sun wheel, in its turn meshed with the star wheels.

In a train system that provides a gas turbine as driver, in case of direct mechanical connection through a fixed speed ratio transmission to the load during the start-up of the gas turbine, part of the torque is transferred to the transmission output shaft, which the load is connected to. This entails the need for the gas turbine to bear a load resistance at the start-up, which implies the impossibility to use single shaft gas turbines due to their torque output limitations during the start-up. To prevent this kind of problem, usually, one or more clutches or large starter equipment such as electric motors, steam turbines or expanders are provided, which necessarily increase the cost of the plant, as well as efficiency losses.

Also, in a train system that provides an electric motor as a driver, in case of direct mechanical connection through a fixed speed ratio transmission to the load, at the start-up phase, the electric motor bears the load resistance, given by its inertia. Thus, it is necessary to use motors with a greater power to cope with the power peak needed during the start-up phase. This entails an increase of the train plant cost. Also, in this case, the only alternative to a higher power electric motor is the use of one or more clutches in the transmission chain.

The prior art includes the US patent US6715291 B1, which covers applications to drive a load terminal.

Also the prior art includes the US patent application US 2014/0378257 A1, which discloses the control of the gear-shaft, which has the main drawback to be cumbersome.

On the basis of the above, an improved variable speed ratio transmission, compact in size and, at the same time, able to disconnect the driven equipment from the driver during the driver start-up sequences, to realize no-load starts-up, and then able to synchronize the driven equipment speed from stand-still to the driver, which is already at its nominal speed, would be welcomed in the industry, to allow train arrangement flexibility and, at the same time, capable to control the driven equipment speed to cover any operating condition.

### SUMMARY

The present invention is defined by the combination of features of claim 1, the dependent claims show further advantageous embodiments of the invention.

### BRIEF DESCRIPTION OF THE DRAWINGS

A more complete appreciation of the disclosed embodiments of the invention and many of the attendant advantages thereof will be readily obtained as the same becomes better understood by reference to the following detailed description when considered in connection with the accompanying drawings, wherein:
Fig. 1 illustrates a schematic of a scheme of a drive arrangement according to a first embodiment;
Fig. 2 illustrates a perspective view of a layshaft gearbox according to the present invention;
Fig. 3 illustrates a longitudinal sectional view of the layshaft gearbox of Fig. 2;
Fig. 4 illustrates an embodiment of a schematic of a control logic unit;
Fig. 5 illustrates a flowchart of the method for operating a train system according to the present invention;
Fig. 6 illustrates a flowchart of the method for operating a train system including a single-shaft power turbine;
Fig. 7 illustrates a flowchart of the method for operating a train system including a double-shaft power turbine; and
Fig. 8 illustrates a further flowchart of the method for operating a train system including a double-shaft power turbine.

### DETAILED DESCRIPTION OF EMBODIMENTS

In mechanically driven equipment, a power source, such as a gas turbine, an electric motor, a diesel engine, a gas engine and the like, has to be connected to a load. The connection takes place by a transmission system, which can vary its transmission speed ratio, to vary the driven equipment speed, according to any possible operating circumstances. The transmission system comprises a variable transmission gearbox. The transmission speed ratio of the variable speed gearbox is adjusted by a motor-generator unit, arranged around, or in an annular way, the star carrier of the variable speed gearbox, which can be operated either as a motor or as a generator, to adjust the speed ratio of the gearbox.

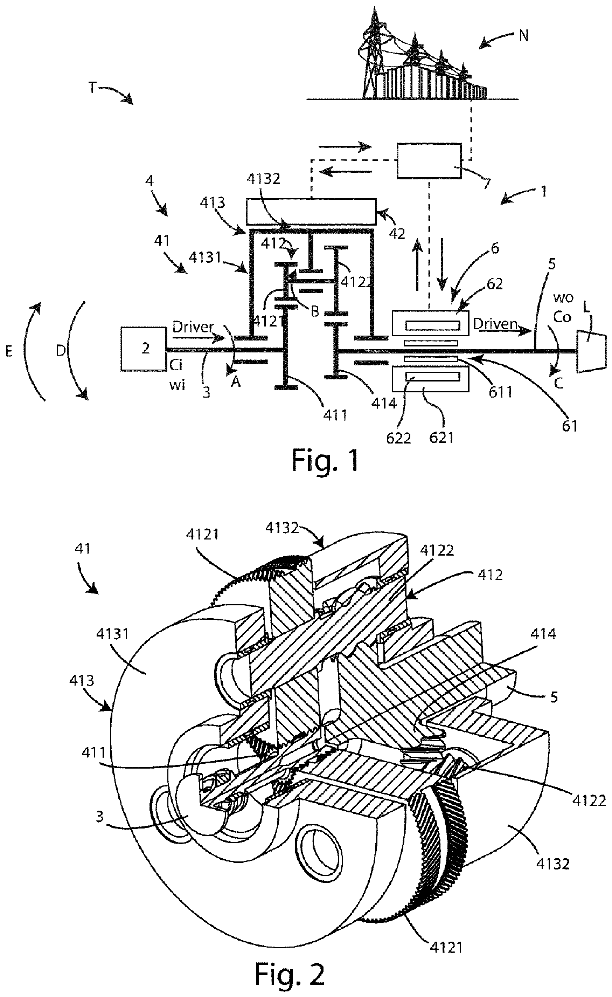

Referring now to the drawings, Fig. 1 shows a train system T according to a first embodiment, wholly indicated with reference number 1.

In particular, train system T comprises a power source 2, a drive arrangement 1, connected through an input shaft 3 to the power source 2, and a load L, in its turn connected to the drive arrangement 1 through an output shaft 5. Also, the drive arrangement 1 comprises a hybrid gearbox 4, configured to transmit the torque from the input shaft 3 to the output shaft 5.

The drive arrangement 1 also comprises a control unit 7, which is a computer, and a power balance motor-generator unit 6, which is associated with the output shaft 5. The control unit 7 is operatively connected to the hybrid gearbox 4, and to the second motor-generator unit 6, to adjust the power transmitted to the load L, in terms of torque *Cₒ* and rotational speed *ωₒ.* Furthermore, the control unit 7 is connectable to an electricity grid or battery packs N, as better explained below.

The power source 2 can be of any type used in the field of mechanically driven equipment. In particular, it can be a gas turbine, of double-shaft type, thus capable of varying its rotation speed, or single-shaft type, thus operating at a fixed speed. Alternatively, the power source 2 can also be an electric motor, a steam turbine, an expander, a diesel engine or a gas engine. The power source 2 is capable of delivering a torque, indicated with *Cᵢ* to rotate the input shaft 3 at a rotational speed *ωᵢ*.

The hybrid gearbox 4 comprises a layshaft gearbox 41 and a speed ratio motor-generator unit 42. The structure of the layshaft gearbox 41 is described in the following Then how the speed ratio motor-generator unit 42 is associated with the layshaft gearbox 41 and operates it is also disclosed.

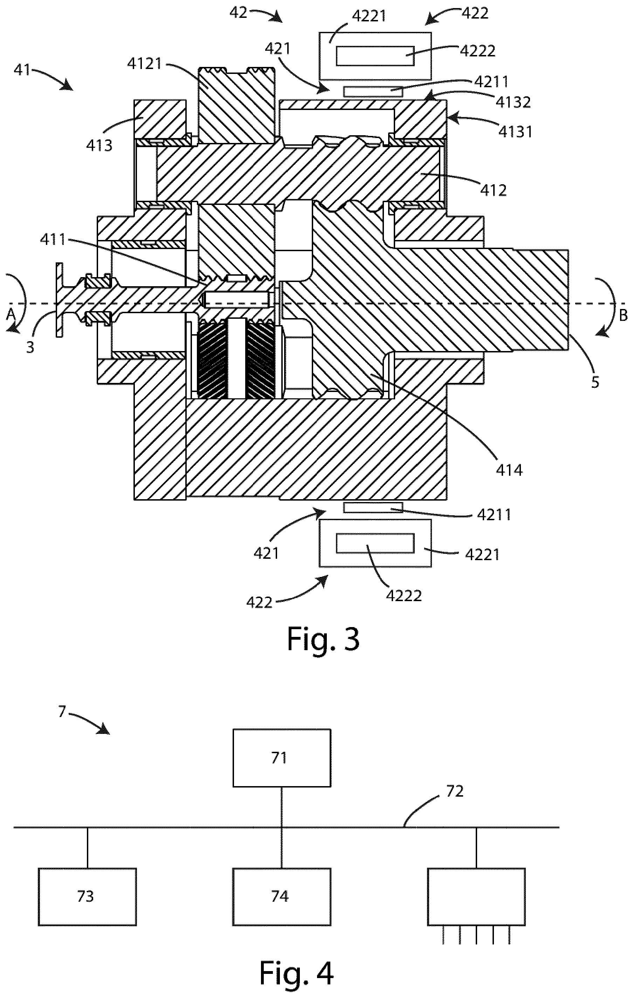

Referring also to Fig. 2 and Fig. 3, it is observed that the layshaft gearbox 41 comprises an input sun wheel 411, connected to the input shaft 3, and two or more (usually three) compound star wheel shafts 412, each one having a first gear stage 4121, meshed with the input sun wheel 411, and a second gear stage 4122. The layshaft gearbox 41 also comprises a star carrier 413, having a body 4131, on which an outside diametral surface 4132 is obtained, which function will be better explained in the following.

The body 4131 of the star carrier 413 houses the input sun wheel 411 and the compound star wheel shafts 412. Each compound star wheel shaft 412 is pivoted about the body 4131 of the star carrier 413.

The layshaft gearbox 41 comprises also an output sun wheel 414, connected to the output shaft 5, and meshed with the second gear stage 4122 of each compound star wheel shafts 412. The output sun wheel 414 is also housed within the body 4131 of the star carrier 413.

The speed ratio motor-generator unit 42 is a perimetral low voltage electric machine, arranged on whole the outside diametral surface 4132 of the body 413 of the layshaft gearbox 41. In particular, the speed ratio motor-generator unit 42 is annularly arranged around the body 413 of the layshaft gearbox 41, covering the whole perimeter. Referring also to Fig. 3, the speed ratio motor-generator unit 42 comprises a rotor 421, arranged on the outside diametral surface 4132 of the body 413 of the layshaft gearbox 41, and a stator 422, arranged around the rotor 421, and therefore around the outside diametral surface 4132 of the body 413 of the layshaft gearbox 41.

In the embodiment illustrated in Fig. 3, the rotor 421 comprises or is constituted of a plurality of permanent magnets 4211, installed on the outside diametral surface 4132. In other embodiments, the rotor 421 may be realized by windings.

Also, in the embodiment illustrated in Fig. 3 the stator 422 comprises a stator core 4221 and a winding 4222. As can be seen from the longitudinal section of Fig. 3, the stator 422 surrounds the rotor 421.

The annular or perimetral arrangement of the speed ratio motor-generator unit 42 on the outside diametral surface 4132 of the star carrier 413 allows a compact arrangement of the hybrid gearbox 4. In addition, in view of the high power to be transmitted involved, in view of the fact that the power source 2 to which the drive arrangement 1 is intended to be connected, such as single shaft gas turbines, double shaft gas turbines, steam turbines, expanders, electric motors, diesel engines, etc., the compact structure described, in particular the annular position of the speed ratio motor-generator unit 42 all around (annularly) the star carrier 413 allows an improved power transmission, reducing any risk of failure of operating blocking of the hybrid gearbox 4, and therefore of the drive arrangement 1.

In operation, by the speed ratio motor-generator unit 42 is possible rotating (or controlling the rotation) of the star carrier 413, with respect to the input sun wheel 411 and the output sun wheel 414, thus, adjusting the rotation speed *ωₒ* and the torque *Cₒ* of the output shaft 5, which is connected, as said above, to the output sun wheel 414.

It is noted that the star carrier 413 speed can be controlled in both sense of rotation by the speed ratio motor-generator unit 42. This allows drive assembly to be easily adapted, to be connected to any kind of power source 2 and extending the speed ratio adjustable range.

Since the speed ratio motor-generator unit 42 is arranged directly around the star carrier 413, namely, as better specified above, in an annular way, thus all around the annularly arranged around the body 413, high compactness of the assembly is obtained, as said above. Furthermore, as can be seen, the layshaft gearbox 41 is not blocked, but its movement is controlled, namely, the relative rotation with respect to the input 3 or the output 5 shaft, by means of the speed ratio motor-generator unit 42. Furthermore, since the layshaft gearbox 41, or more precisely the star carrier 413, is not blocked, it is possible not to transmit the torque to the output shaft 5 when the speed ratio motor-generator unit 42 is switched-off, so that the power source 2 does not encounter any resistant torque of the load L. As will be seen below, this aspect avoids the insertion of clutches in the kinematic chain and allows high design freedom.

The speed ratio motor-generator unit 42 is a low voltage motor-generator unit that can operate both as an electric motor and as a generator, as disclosed above, to control the rotation of the star carrier 413. When the speed ratio motor-generator unit 42 is in generator mode, the drive arrangement 1 is delivering electric current to a grid N or battery systems recovering part of the driver output power, according to the following balance equation ${C}_{i} {ω}_{i} = {C}_{c} {ω}_{c} + {C}_{o} {ω}_{o}$ Where *C_{c}* and *ω_{c}* are the torque and the rotation speed respectively, and their product is the power delivered to the grid N or the battery pack.

When the speed ratio motor-generator unit 42 is in motor mode, the drive arrangement 1 is absorbing electric current from a grid or battery systems superimposing its power to the driver output power, according to the following equation: ${C}_{i} {ω}_{i} + {C}_{c} {ω}_{c} = {C}_{o} {ω}_{o}$

The control unit 7 is connected to the speed ratio motor-generator unit 42 and controls and adjusts its rotation. In particular, as will be better described below, by adjusting the rotation of the star carrier 413 by means of the speed ratio motor-generator unit 42, the torque and speed transmitted to the load L can be adjusted accordingly.

The drive arrangement 1 includes, as mentioned above, the power balance motor-generator unit 6, which is an electric machine, integrated to the output shaft 5, to adjust its torque demand . Being the power balance motor-generator unit 6 integrated to the output shaft 5, as the former is annularly arranged as on the second, allows a compact structure and more reliable system due to the absence of any transmission chain, like belts or gears. The power balance motor-generator unit 6 can be of various types. In some embodiments, the power balance motor-generator unit 6 comprises or is constituted of a plurality of permanent magnets 4211, installed on the outside diametral surface of the output shaft 5, or it can be of the same speed ratio motor-generator unit 42 technology, thus also in this case achieving an overall reduced size as well as reducing the risks of any failure of the system.

As mentioned above, the power balance motor-generator unit 6 is integrated to the output shaft 5. More specifically referring to Fig. 1, the power balance motor-generator unit (6) comprises a rotor 61, which is installed on the outside diametral surface output shaft 5, and a stator 62 arranged around the rotor 61. The stator 62 comprises also a stator core 621 and a winding 622. As can be seen in the figure the stator 62 surrounds the rotor 61.

In some embodiments the rotor 61 comprises also a plurality of permanent magnets 611 installed on the outside diametral surface of the output shaft 5. In some other embodiments the rotor 61 comprises instead a plurality of windings arranged on the outside diametral surface of the output shaft 5.

In addition, the arrangement of the power balance motor-generator unit 6 all around the output shaft 5 has the effect to dampen the oscillations of the shaft, possibly caused by disturbing harmonics, or even to dampen any other undesired vibrations over the output shaft 5.

Also, the power balance motor-generator unit 6 is a low voltage motor-generator machine capable of operating either as an electric motor, thus acting on the movement of the output shaft 5, or as a generator, thus absorbing (at least part of) the power on the input shaft 3, thus generating electric current. The operation shift from electric motor or generator of the power balance motor-generator unit 6 is controlled by the control unit 7, as better defined below.

To describe the operation of the drive arrangement 1, the operation of the hybrid gearbox 4 of Fig. 1, Fig. 2, and Fig. 3 will be described, and the whole operation of the drive arrangement 1 will be described in different design configurations.

The operation of the hybrid gearbox 4 is as follows. Referring to Fig. 1 or Fig. 3, if the star carrier 413 is held still, the speed ratio motor-generator unit 42, when the input shaft rotates in one direction, such as the direction indicated with the arrow A, the first gear stage 4121 and the second gear stage 4122 of the compound star wheel shafts 412 rotate in the opposite direction indicated with the arrow B. Accordingly, the output shaft 5 rotates in the direction indicated with the arrow C, which is the same direction of arrow A. The rotation speed *ωₒ* of the output shaft 5 is a function of the rotation speed *ωᵢ* of the input shaft 3, depending on the transmission ratio of the compound star wheel shafts 412, namely on the radiuses of the first gear stage 4121, the second gear stage 4122, the input sun wheel 411, and the output star wheel 414. If the star carrier 413 rotates according to the direction indicated with the arrow D, namely, according to the same direction of the input shaft 3 of arrow A, the rotation speed *ωₒ* of the output shaft 5 is increased. Instead, if the star carrier 413 rotates in the opposite direction of the arrow D, namely according to the direction E, then the rotation speed *ωₒ* of the output shaft 5 is decreased. More specifically, over a rotation speed threshold the output shaft 5 can be zeroed and no torque transmitted to the load L.

Accordingly, if the output shaft 5 is blocked while the input shaft 3 rotates at a certain rotation speed *ωᵢ*, the star carrier 413 will rotate in the direction according to arrow E.

The operation of the drive assembly 1 is coordinated by the control unit 7, which can be configured as Active Front-End Variable Frequency Drive. In some embodiments, the control unit 7 may be realized or implemented as a cloud computing system, a computer network, or other installations capable of processing data by running appropriate computer programs.

In some embodiments, and particularly referring to Fig. 4, the control unit 7 may comprise a processor 71, a bus 72, to which the processor 71 is connected to, a database 73, connected to the bus 72, so as to be accessed and controlled by the processor 71, a computer-readable memory 74, also connected to the bus 72, so as to be accessed and controlled by the processor 71, a receiving-transmitting module 75, connected to the bus 72, configured to receive the signals from the speed ratio motor-generator unit 42 and the power balance motor-generator unit 6, concerning their operation, and transmit control signals to the speed ratio motor-generator unit 42 and from the power balance motor-generator unit 6, for operating the same e coordinate the operation of the drive assembly 1 according to the possible different embodiments the drive assembly 1 can operate.

Based of the above, in order to better disclose the advantage of the compact sizes of the hybrid gearbox 4 and the fact that the star carrier 413 speed can be controlled in both sense of rotation, the operation of the drive assembly 1 is now described in different configurations, in order to better appreciate the performance of the same. More specifically, the configuration of the drive assembly 1 according to Fig. 1 can be adapted to any type of power source 2, regardless of whether it is capable of varying its speed, or not. This result is achieved by the control unit 7, which is configured to adapt the behavior of the hybrid gearbox 4 to the different circumstances.

The drive assembly 1 is capable of operating both with single-shaft gas turbines or with any other fixed speed driver, like synchronous or induction electric motors, as power source 2, which, as known, cannot change the rotation speed, as well as with double-shaft gas turbines, steam turbines, expanders, VFD electric motors, diesel engines and gas engines as power source 2. The operation of the drive assembly 1 is described in case of the power source 2 is a single-shaft gas turbine, and in case of the power source 2 is a double-shaft gas turbine or any variable speed driver, discussing the technical and design advantages in any of the cases.

If the power source 2 is a single-shaft gas turbine, the drive assembly 1 will start-up the gas turbine from stand-still condition, up to its crank speed, and disconnect the load L during the gas turbine 2 acceleration phase from its crank speed to the gas turbine nominal speed (thus decoupling the load L from the power sources), then it will rump-up the load L to bring the driven equipment to its operating speed and finally regulate the driven equipment speed within its operative speed range.

By means of the drive assembly 1, and referring again to Fig. 1, during the start-up phase of a single-shaft gas turbine 2, the speed ratio motor-generator unit 42 acts first as a motor to rotate the star carrier 413 in the direction according to arrow E, and therefore, to bring, as said above, the gas turbine 2 to its crank speed.

Then the speed ratio motor-generator unit 42 is switched-off, so that the single-shaft gas turbine 2 can accelerate to reach its nominal speed without any resistant torque coming from the load L. In this phase the output shaft 5 is decoupled from the input shaft 3 (and then from the power source 2) so that the star carrier 413 is left free to spin (usually called "free spinning mode") and the torque transmitted to the load L is virtually zero.

In some embodiments, the output drive shaft 5 can be also blocked by means of the power balance motor-generator unit 6, which, as said, is controlled by the control unit 7. In this way, during the acceleration of the gas turbine 2, it is ensured that it is only the layshaft gearbox 41, and in particular, the rotation of the star carrier 413, able to compensate the speed increase of the gas turbine 2 and of the input shaft 3. In this configuration, the power balance motor-generator unit 6 allows the total control of torque transmission by the rotation of the star carrier 413.

The torque is then gradually transmitted to the load L by means of said control unit 7, which allows the rotation of the output shaft 5 by means of the speed ratio motor-generator unit 42. The speed ratio motor-generator unit 42 acts as generator and slow-down the star carrier 413 from its "free spinning mode". With the power source 2 at its nominal running speed any reduction of star carrier 413 speed from its "free spinning mode" will results in an increase of the output shaft 5 speed from stand-still condition (the power balance motor-generator unit 6 will be switched-off to keep the output shaft 5 free to rotate or act as an helper if requested). The star carrier 413 speed will be further reduced from its "free spinning mode" up to zero speed by the action of the speed ratio motor-generator unit 42, which continue to act as generator, and then the star carrier 413 speed will be increased in opposite rotation direction (in the direction according to arrow D of Fig. 1) by the action of the speed ratio motor-generator unit 42, which now act as motor, resulting this in a further increase of the output shaft 5 speed.

The layshaft gearbox 41 will be cinematically designed in order to bring the driven equipment to an operating point inside its operative speed range when the star carrier 413 speed is zero, so that the speed ratio motor-generator unit 42 will be able to regulate the driven equipment speed within its operative speed range, alternatively acting as generator, up to a maximum speed of the star carrier 413 in the direction according to arrow E, which will correspond to the driven equipment at minimum operative speed (MOS); or acting as motor up to a maximum speed in the direction according to arrow D, which will correspond to the driven equipment at maximum continuous speed (MCS).

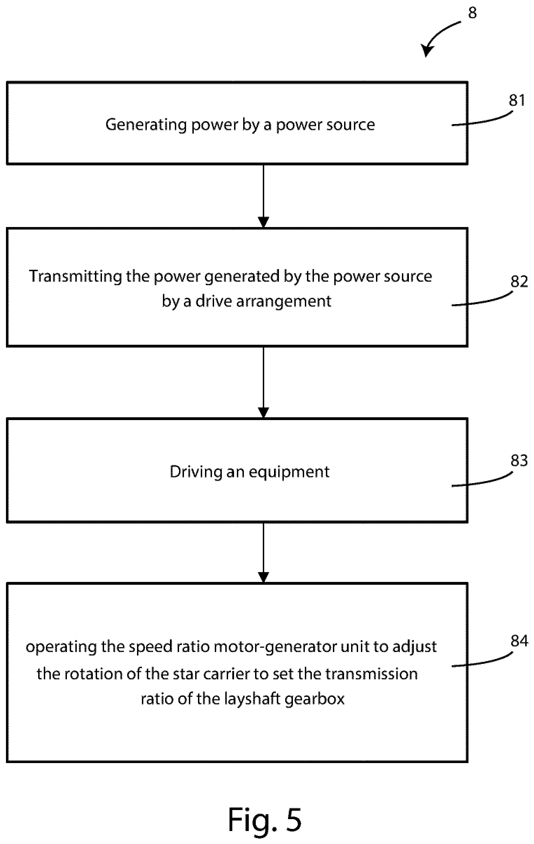

Referring to Fig. 5, a flowchart summarizing the method 8 for operating the train system T with a general power source 2 is shown. In particular, the method 8 comprises the steps of generating 81 power by a power source 2, thus rotating the input shaft 3, transmitting 82 the power generated by the power source 2 by the drive arrangement 1, and driving 83 the equipment L connected to the output shaft 5. The method 8 further comprises the step 84 of operating the speed ratio motor-generator unit 42, to adjust the rotation of the star carrier 413 to set the transmission ratio of the layshaft gearbox 41, to adjust the speed *ωₒ* and the torque *Cₒ* at the output shaft 5.

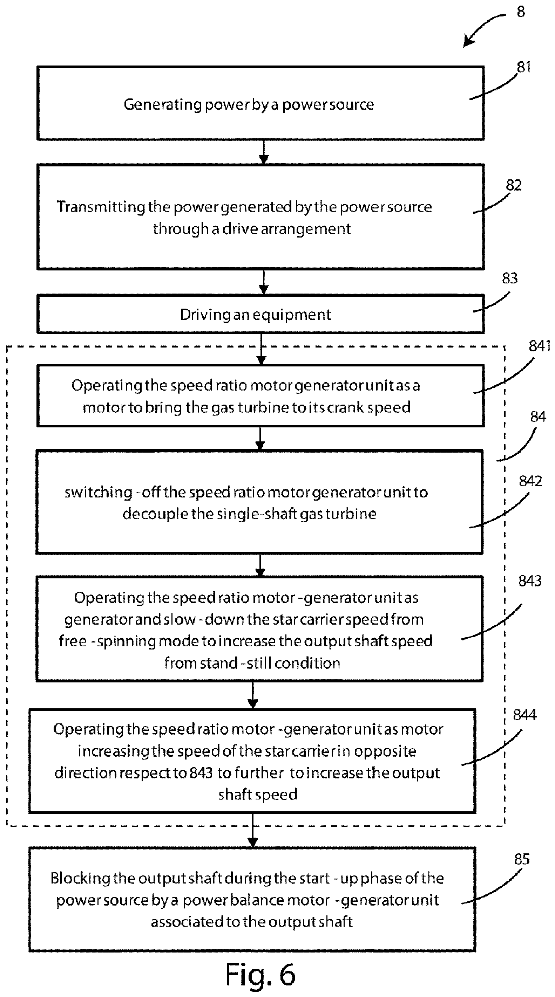

Referring to Fig. 6, the operating method 8 is shown in case of the power source is a single-shaft gas turbine 2. The operating step 84 as already defined above, comprising the sub-steps of operating 841 the speed ratio motor generator unit 42 as a motor to bring the gas turbine 2 to its crank speed and then switching-off 842 the speed ratio motor generator unit 42 to decouple the single-shaft gas turbine 2 to accelerate and to reach its nominal speed, so that the star carrier 413 is free to spin. Then the speed ratio motor generator unit 42 is operated according to the sub-step 843as generator and slow-down the star carrier 413, to increase the output shaft 5 speed from stand-still condition.

Also, the method 8 for operating the train system T further comprises the sub step of operating 844 the speed ratio motor-generator unit 42 as motor, to increase the speed of star carrier 413 in an opposite direction then the step 843, so as to further increase the speed of the output shaft 5.

Finally, a blocking step 85 of the output shaft 5 during the start-up phase of the power source 2 by a power balance motor-generator unit 6 associated to the output shaft 5 can be included.

The drive assembly 1 disclosed herein is capable of adapting its operation also in case of a double-shaft gas turbine as power source 2. In particular, in this case, a double-shaft gas turbine optimizes its efficiency when operates at the maximum power and speed. In this case, in fact, the corresponding pollution (in particular the emitted CO₂) is proportionally minimized per kilowatt (kW) generated. Therefore, operating the double-shaft gas turbine to the maximum power and speed, the rotational speed *ωᵢ* of the input shaft 3 is fixed. The output shaft 5 rotational speed *ωₒ* can be adjusted by the star carrier 413 by means of the speed ratio motor-generator unit 42.

The power balance motor-generator unit 6 adjusts, by means of the control unit 7, the power absorbed by the load L, if operated as a generator, absorbing part of the torque transmitted to the output shaft 5. Therefore, part of the power generated by the power source 2 can be recovered by the power balance motor-generator unit 6 and transformed in electrical energy. The electrical energy generated by the power balance motor-generator unit 6 can be then either injected into the electricity grid N or injected into a battery system for future use, thus balancing the power to be transmitted to the load L and, at the same time, recovering the energy produced in excess by the power source 2.

Further, in case, for example, the load L requires additional power at different operating speed, the control unit 7 can either increase the output shaft 5 rotational speed *ωₒ* by adjusting the rotation of the star carrier 413, and/or reduce the torque (and therefore the power) absorbed by the power balance motor-generator unit 6.

Further, in case, for example, the load L requires a different power at constant operating speed, the control unit 7 can adjust the torque (and therefore the power) absorbed by the power balance motor-generator unit 6.

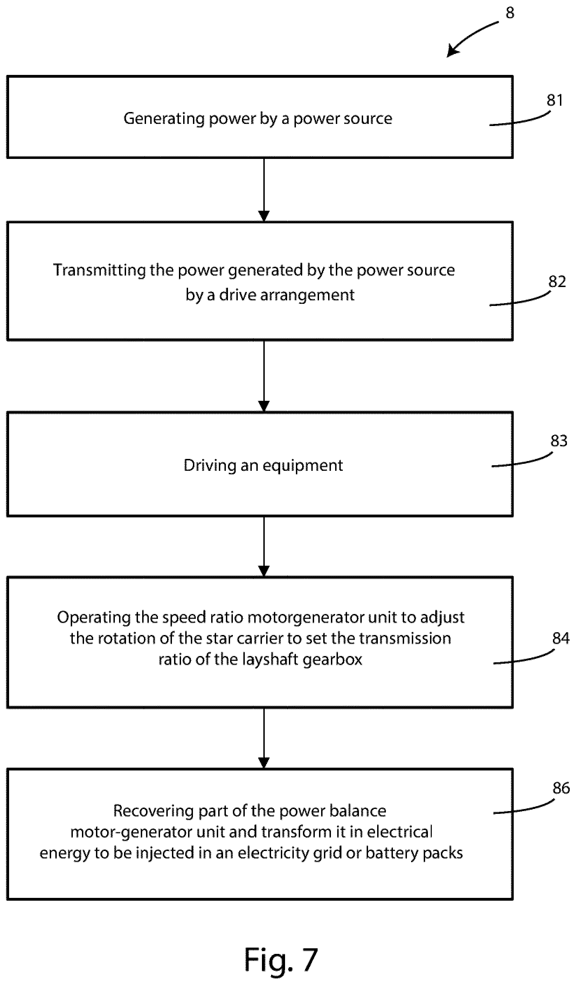

Referring to Fig. 7, a flowchart summarizing the method 8 for operating the train system T with a double-shaft gas turbine 2 as power source is shown. The method 8, in addition to the above mentioned steps illustrated in Fig. 5 of generating 81 power by the gas turbine 2, transmitting 82 the power generated by the power source 2 by the drive arrangement 1, driving 83 the equipment L connected to the output shaft 5, and the step 84 of operating the speed ratio motor-generator unit 42, to adjust the rotation of the star carrier 413 to set the transmission ratio of the layshaft gearbox 41, also comprises the step of recovering 86 part of the power transmitted to the output shaft 5 and transforming it in electrical energy to be injected in an electricity grid or battery packs N the power balance motor-generator unit 6, operable as generator. In this way, as mentioned, the double shaft gas turbine 2 can operate at the maximum power and speed, namely at the maximum efficiency, enabling to minimize the CO₂ production per equivalent overall output and enabling to build spinning reserve by recovering part of the energy in excess from power source 2.

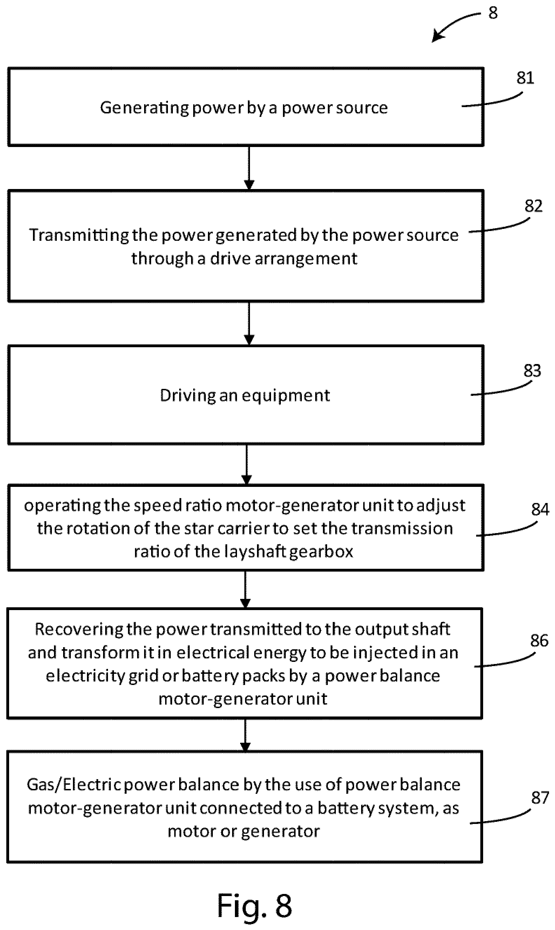

Referring to Fig. 8, a flowchart summarizing the method 8 for operating the train system T with a double-shaft gas turbine 2 as power source is also shown. The method 8, in addition to the above mentioned steps illustrated in Fig. 5 of generating 81 power by the gas turbine 2, transmitting 82 the power generated by the power source 2 by the drive arrangement 1, driving 83 the equipment L connected to the output shaft 5, and the step 84 of operating the speed ratio motor-generator unit 42, to adjust the rotation of the star carrier 413 to set the transmission speed ratio of the layshaft gearbox 41, also comprises the step of gas/electric power balance 87 by the use of power balance motor-generator unit 6, as motor or generator connected to an electric grid, respectively delivering power to the output shaft 5 or absorbing part of the power transmitted to the output shaft 5 by the power source 2, based on energy availability and cost or to cover gas turbines power surplus/deficit based on ambient conditions (winter/summer or night/day ambient temperature variation).

Referring to Fig. 9, a flowchart summarizing the method 8 for operating the train system T with a double-shaft gas turbine 2 as power source is shown. The method 8, in addition to the above mentioned steps illustrated in Fig. 5 of generating 81 power by the gas turbine 2, transmitting 82 the power generated by the power source 2 by the drive arrangement 1, driving 83 the equipment L connected to the output shaft 5, and the step 84 of operating the speed ratio motor-generator unit 42, to adjust the rotation of the star carrier 413 to set the transmission speed ratio of the layshaft gearbox 41, also comprises the step of Gas/Electric power balance 87 by the use of power balance motor-generator unit 6, as motor or generator, connected to a battery system, respectively delivering power to the output shaft 5 or absorbing part of the power transmitted to the output shaft 5 by the power source 2, thus enabling electric energy storage in battery systems to build spinning reserve and cover gas turbines power surplus/deficit based on ambient conditions (winter/summer or night/day ambient temperature variation).

In case of the drive source 2 is an electric motor, synchronous or induction electric motor, at the start it is necessary provide a peak power to overcome the inertia of the load L. This requires that the electric motor is oversized in terms of power, just to compensate for this power need in the start-up phase. This causes an increase in the cost of the component.

In case of the drive source 2 is a synchronous electric motor, its pulsating torque at the start-up will cross the train TNF's (typically the first and second train torsional frequencies), thus resulting in a heavy torque response, in resonance, which can limit the number of start-ups due to fatigue phenomena.

The hybrid gearbox 4, will be able to start-up the electric motor through the operation of the speed ratio motor-generator unit 42 decoupling the load L thus avoiding to oversize the electric motor as power source 2 and at the same time avoiding the torsional interaction with train torsional natural frequencies. In fact, exciting the train torsional natural frequencies results in dangerous torque responses at the torque transmission devices, such as couplings and shafts.

The same method steps can be applied for starting up a reciprocating engine, namely a gas engine or a diesel engine, avoiding installing a dedicated starting device.

While aspects of the invention have been described in terms of various specific embodiments, it will be apparent to those of ordinary skill in the art that many modifications, changes, and omissions are possible without departing form the scope of the appended claims.

When elements of various embodiments are introduced, the articles "a", "an", "the", and "said" are intended to mean that there are one or more of the elements. The terms "comprising", "including", and "having" are intended to be inclusive and mean that there may be additional elements other than the listed elements.

## Claims

1. A drive arrangement (1) to drive a mechanical driven equipment (L),
wherein a power source (2) can be coupled to the drive arrangement (1), and the equipment (L) to be driven can be coupled to the drive arrangement (1), comprising:
an input shaft (3), that can be coupled to the power source (2);
an output shaft (5), that can be coupled to the equipment (L);
a hybrid gearbox (4), comprising
layshaft gearbox (41), connected to the input shaft (3) and the output shaft (5), and comprising a star carrier (413), configured to adjust the transmission speed ratio of the layshaft gearbox (41) between the input shaft (3) and the output shaft (5), wherein the star carrier (413) comprises a body (4131) with an outside diametral surface (4132), and
a speed ratio motor-generator unit (42), configured to control the rotational speed of the star carrier (413);
wherein the speed ratio motor-generator unit (42) is arranged on the outside diametral surface (4132) of the body (4131) of the star carrier (413) in a perimetral annular way, wherein the output shaft (5) comprises a power balance motor-generator unit (6), the power balance motor-generator unit (6) being configured to control the output torque, **characterized in that**
the power balance motor-generator unit (6) is annularly arranged on the output shaft (5).

2. The drive arrangement (1) of claim 1,
wherein the speed ratio motor-generator unit (42) comprises:
a rotor (421), installed on the outside diametral surface (4132) of the body (4131) of the star carrier (413); and
a stator (422) arranged around the rotor (421), wherein the stator (422) comprises a stator core (4221) and a winding (4222), and wherein the stator (422) surrounds the rotor (421).

3. The drive arrangement (1) of claim 2, wherein the rotor (421) comprises a plurality of permanent magnets (4211) installed on the outside diametral surface (4132) of the body (4131) of the star carrier (413).

4. The drive arrangement (1) of claim 2, wherein the rotor (421) comprises a plurality of windings arranged on the outside diametral surface (4132) of the body (4131) of the star carrier (413).

5. The drive arrangement (1) of claim 1, wherein layshaft gearbox (41) comprises:
an input sun wheel (411), connected to the input shaft (3);
two or more compound star wheel shafts (412), each one having a first gear stage (4121), meshed with the input sun wheel (411), and a second gear stage (4122); and
an output star wheel (414), connected to the output shaft (5), and meshed with the second gear stage (4122) of each compound star wheel shafts (412);
wherein the body (4131) of the star carrier (413) houses within the input sun wheel (411), the compound star wheel shafts (412), and the output star wheel (414); and
wherein each compound star wheel shaft (412) is pivoted about the housing (4131) of the star carrier (413).

6. The drive arrangement (1) of claim 1, comprising a control unit (7) operatively connected to the speed ratio motor-generator unit (42) and configured to control the operation of the speed ratio motor-generator unit (42) to adjust the transmission speed ratio of the layshaft gearbox (41),
wherein the control unit (7) is implemented as an active front-end variable frequency drive in low voltage, including a computer and/or a cloud computing system and/or a computer network or other installations capable of processing data by running appropriate computer programs.

7. The drive arrangement (1) of claim 6,
wherein the control unit (7) comprises:
a processor (71);
a bus (72), to which the processor (71) is connected to;
a database (73), connected to the bus (72), so as to be accessed and controlled by the processor (71);
a computer-readable memory (74), connected to the bus (72), so as to be accessed and controlled by the processor (71); and
a receiving-transmitting module (75), connected to the bus (72), configured to receive the signals from the speed ratio motor-generator unit (42) and from the power balance motor-generator unit (6), and transmit control signals to the speed ratio motor-generator unit (42) and from the power balance motor-generator unit (6), for operating the same e coordinate the operation of the drive assembly (1).

8. The drive arrangement (1) of claim 6,
wherein the control unit (7) is connected to an electricity grid (N) or battery packs, and
wherein the speed ratio motor-generator unit (42) is configured to operate as electric generator or electric motor, to adjust the speed of the star carrier (413), thus to absorb at least part of the power transmitted to the star carrier (413), to generate an electric current to be injected into the electricity grid (N) or battery packs, or to absorb electric power from the electricity grid (N) or battery packs to deliver power to the star carrier (413) of the layshaft gearbox (41).

9. The drive arrangement (1) of claim 6, comprising a power balance motor-generator unit (6), operatively associated with the output shaft (5), and connected to the control unit (7),
wherein the power balance motor-generator unit (6) is configured to keep the power sources (2) running at their maximum efficiency conditions, thus enabling power balance based on energy availability and cost, and enabling electric energy storage in battery systems to build spinning reserve.

10. The drive arrangement (1) of claim 9, wherein the power balance motor-generator unit (6) comprises:
a rotor (61), installed on an outside diametral surface of the output shaft (5); and
a stator (62) arranged around the rotor (61), wherein the stator (62) comprises a stator core (621) and a winding (622), and wherein the stator (62) surrounds the rotor (61).

11. The drive arrangement (1) of claim 10, wherein the rotor (61) comprises a plurality of permanent magnets (611) installed on the outside diametral surface of the output shaft (5).

12. The drive arrangement (1) of claim 10, wherein the rotor (61) comprises a plurality of windings arranged on the outside diametral surface of the output shaft (5).

13. A train system (T) comprising:
a drive arrangement (1) according to any one of claims 1-9;
a power source (2) connected to the input shaft (3) of the drive arrangement (1); and
a load (L) connected to the output shaft (5) of the drive arrangement (1).

14. The train system (T) of claim 13, wherein the load (L) is a compressor, a pump or a ship propeller.

15. The train system (T) of claim 13, wherein the power source (2) is a single shaft gas turbine, and/or a double shaft gas turbine, and/or a steam turbine, and/or an expander, and/or an electric motor, and/or a diesel engine, and/or a gas engine.

## Patentansprüche

1. Antriebsanordnung (1), um eine mechanisch angetriebene Einrichtung (L) anzutreiben,
wobei eine Leistungsquelle (2) an die Antriebsanordnung (1) gekoppelt sein kann und die anzutreibende Einrichtung (L) an die Antriebsanordnung (1) gekoppelt sein kann, umfassend:
eine Eingangswelle (3), die mit der Leistungsquelle (2) gekoppelt sein kann;
eine Ausgangswelle (5), die an die Einrichtung (L) gekoppelt sein kann;
ein Hybridgetriebe (4), umfassend
ein Vorgelegewellengetriebe (41), das mit der Eingangswelle (3) und der Ausgangswelle (5) verbunden ist und umfassend einen Sternträger (413), der konfiguriert ist, um das Überragungsgeschwindigkeitsverhältnis des Vorgelegewellengetriebes (41) zwischen der Eingangswelle (3) und der Ausgangswelle (5) anzupassen, wobei der Sternträger (413) einen Körper (4131) mit einer äußeren diamtralen Oberfläche (4132) umfasst und
eine Geschwindigkeitsverhältnis-Motor-Generator-Einheit (42), die konfiguriert ist, um die Drehgeschwindigkeit des Sternträgers (413) zu steuern;
wobei die Geschwindigkeitsverhältnis-Motor-Generator-Einheit (42) an der äußeren diametralen Oberfläche (4132) des Körpers (4131) des Sternträgers (413) auf perimetrale ringförmige Weise angeordnet ist, wobei die Ausgangswelle (5) eine Leistungsausgleichs-Motor-Generator-Einheit (6) umfasst, wobei die Leistungsausgleichs-Motor-Generator-Einheit (6) konfiguriert ist, um das Ausgangsdrehmoment zu steuern, **dadurch gekennzeichnet, dass** die Leistungsausgleichs-Motor-Generator-Einheit (6) ringförmig an der Ausgangswelle (5) angeordnet ist.

2. Antriebsanordnung (1) nach Anspruch 1,
wobei die Geschwindigkeitsverhältnis-Motor-Generator-Einheit (42) umfasst:
einen Rotor (421), installiert auf der äußeren diametralen Oberfläche (4132) des Körpers (4131) des Sternträgers (413); und
einen Stator (422), angeordnet um den Rotor (421) herum, wobei der Stator (422) einen Statorkern (4221) und eine Wicklung (4222) umfasst, und wobei der Stator (422) den Rotor (421) umgibt.

3. Antriebsanordnung (1) nach Anspruch 2, wobei der Rotor (421) eine Vielzahl von Permanentmagneten (4211) umfasst, die auf der äußeren diametralen Oberfläche (4132) des Körpers (4131) des Sternträgers (413) installiert sind.

4. Antriebsanordnung (1) nach Anspruch 2, wobei der Rotor (421) eine Vielzahl von Wicklungen umfasst, die auf der äußeren diametralen Oberfläche (4132) des Körpers (4131) des Sternträgers (413) angeordnet sind.

5. Antriebsanordnung (1) nach Anspruch 1, wobei das Vorgelegewellengetriebe (41) umfasst:
ein Eingangssonnenrad (411), das mit der Eingangswelle (3) verbunden ist;
zwei oder mehr Verbundsternradwellen (412), die jeweils eine erste Getriebestufe (4121), die mit dem Eingangssonnenrad (411) in Eingriff steht, und eine zweite Getriebestufe (4122) aufweisen; und
ein Ausgangssternrad (414), das mit der Ausgangswelle (5) verbunden ist und mit der zweiten Getriebestufe (4122) jeder Verbundsternradwelle (412) in Eingriff steht;
wobei der Körper (4131) des Sternträgers (413) das Eingangssonnenrad (411), die Verbundsternradwellen (412) und das Ausgangssternrad (414) in sich aufnimmt; und
wobei jede Verbundsternradwelle (412) um das Gehäuse (4131) des Sternträgers (413) herum schwenkbar gelagert ist.

6. Antriebsanordnung (1) nach Anspruch 1, umfassend eine Steuereinheit (7), die mit der Geschwindigkeitsverhältnis-Motor-Generator-Einheit (42) wirkverbunden und konfiguriert ist, um den Betrieb der Geschwindigkeitsverhältnis-Motor-Generator-Einheit (42) zu steuern, um das Übertragungsgeschwindigkeitsverhältnis des Vorgelegewellengetriebes (41) anzupassen,
wobei die Steuereinheit (7) als ein Active-Front-End-Frequenzumrichter in Niederspannung implementiert ist, einschließlich eines Computers und/oder eines Cloud-Rechnersystems und/oder eines Computernetzwerks oder anderer Installationen, die in der Lage sind, Daten durch ein Ausführen entsprechender Computerprogramme zu verarbeiten.

7. Antriebsanordnung (1) nach Anspruch 6, wobei die Steuereinheit (7) umfasst:
einen Prozessor (71);
einen Bus (72), mit dem der Prozessor (71) verbunden ist;
eine Datenbank (73), die mit dem Bus (72) verbunden ist, so dass sie durch den Prozessor (71) aufgerufen und gesteuert werden kann;
einen computerlesbaren Speicher (74), der mit dem Bus (72) verbunden ist, so dass er durch den Prozessor (71) aufgerufen und gesteuert werden kann; und
ein Empfangs-Sende-Modul (75), das mit dem Bus (72) verbunden und konfiguriert ist, um die Signale von der Geschwindigkeitsverhältnis-Motor-Generator-Einheit (42) und von der Leistungsausgleichs-Motor-Generator-Einheit (6) zu empfangen und Steuersignale an die Geschwindigkeitsverhältnis-Motor-Generator-Einheit (42) und von der Leistungsausgleichs-Motor-Generator-Einheit (6) zu übertragen, zum Verarbeiten derselben und Koordinieren des Betriebs der Antriebsanordnung (1).

8. Antriebsanordnung (1) nach Anspruch 6,
wobei die Steuereinheit (7) mit einem Stromnetz (N) oder Batteriepacks verbunden ist und
wobei die Geschwindigkeitsverhältnis-Motor-Generator-Einheit (42) konfiguriert ist, um als elektrischer Generator oder elektrischer Motor betrieben zu werden, um die Geschwindigkeit des Sternträgers (413) anzupassen, um dadurch mindestens einen Teil der Leistung zu absorbieren, die auf den Sternträger (413) übertragen wird, um einen elektrischen Strom zu erzeugen, der in das Stromnetz (N) oder in Batteriepacks einzuspeisen ist, oder um elektrische Leistung aus dem Stromnetz (N) oder Batteriepacks zu absorbieren, um Leistung an den Sternträger (413) des Vorgelegewellengetriebes (41) abzugeben.

9. Antriebsanordnung (1) nach Anspruch 6, umfassend eine Leistungsausgleichs-Motor-Generator-Einheit (6), die der Ausgangswelle (5) wirkzugeordnet und mit der Steuereinheit (7) verbunden ist,
wobei die Leistungsausgleichs-Motor-Generator-Einheit (6) konfiguriert ist, um die Energiequellen (2) unter ihren maximalen Wirkungsgradbedingungen am Laufen zu halten, wodurch ein Leistungsausgleich basierend auf Energieverfügbarkeit und Kosten ermöglicht wird und die Speicherung elektrischer Energie in Batteriesystemen ermöglicht wird, um eine rotierende Reserve aufzubauen.

10. Antriebsanordnung (1) nach Anspruch 9, wobei die Leistungsausgleichs-Motor-Generator-Einheit (6) umfasst:
einen Rotor (61), installiert auf einer äußeren diametralen Oberfläche der Ausgangswelle (5); und
einen Stator (62), angeordnet um den Rotor (61) herum, wobei der Stator (62) einen Statorkern (621) und eine Wicklung (622) umfasst, und wobei der Stator (62) den Rotor (61) umgibt.

11. Antriebsanordnung (1) nach Anspruch 10, wobei der Rotor (61) eine Vielzahl von Permanentmagneten (611) umfasst, die auf der äußeren diametralen Oberfläche der Ausgangswelle (5) installiert sind.

12. Antriebsanordnung (1) nach Anspruch 10, wobei der Rotor (61) eine Vielzahl von Wicklungen umfasst, die auf der äußeren diametralen Oberfläche der Ausgangswelle (5) angeordnet sind.

13. Zugsystem (T), umfassend:
eine Antriebsanordnung (1) nach einem der Ansprüche 1 bis 9;
eine Leistungsquelle (2), die mit der Eingangswelle (3) der Antriebsanordnung (1) verbunden ist; und
eine Last (L), die mit der Ausgangswelle (5) der Antriebsanordnung (1) verbunden ist.

14. Zugsystem (T) nach Anspruch 13, wobei die Last (L) ein Verdichter, eine Pumpe oder ein Schiffspropeller ist.

15. Zugsystem (T) nach Anspruch 13, wobei die Leistungsquelle (2) eine Einwellen-Gasturbine und/oder eine Zweiwellen-Gasturbine und/oder eine Dampfturbine und/oder ein Expander und/oder ein Elektromotor und/oder ein Dieselmotor und/oder ein Gasmotor ist.

## Revendications

1. Agencement d'entraînement (1) pour entraîner un équipement mécanique entraîné (L),
dans lequel une source de puissance (2) peut être accouplée à l'agencement d'entraînement (1), et l'équipement (L) à entraîner peut être accouplé à l'agencement d'entraînement (1), comprenant :
un arbre d'entrée (3), qui peut être accouplé à la source de puissance (2) ;
un arbre de sortie (5), qui peut être accouplé à l'équipement (L) ;
une boîte à engrenages hybride (4) comprenant
une boîte à engrenages à arbre intermédiaire (41), relié à l'arbre d'entrée (3) et à l'arbre de sortie (5), et comprenant un porte-satellites (413) conçu pour ajuster le rapport de vitesse de transmission de la boîte à engrenages à arbre intermédiaire (41) entre l'arbre d'entrée (3) et l'arbre de sortie (5), dans lequel le porte-satellites (413) comprend un corps (4131) muni d'une surface diamétrale extérieure (4132), et
une unité de moteur-générateur à rapport de vitesse (42), conçue pour commander la vitesse de rotation du porte-satellites (413) ;
dans lequel l'unité de moteur-générateur à rapport de vitesse (42) est agencée sur la surface diamétrale extérieure (4132) du corps (4131) du porte-satellites (413) de manière annulaire périmétrique, dans lequel l'arbre de sortie (5) comprend une unité de moteur-générateur d'équilibrage de puissance (6), l'unité de moteur-générateur d'équilibrage de puissance (6) étant conçue pour commander le couple de sortie, **caractérisé en ce que** l'unité de moteur-générateur d'équilibrage de puissance (6) est agencée de manière annulaire sur l'arbre de sortie (5).

2. Agencement d'entraînement (1) selon la revendication 1,
dans lequel l'unité de moteur-générateur à rapport de vitesse (42) comprend :
un rotor (421), installé sur la surface diamétrale extérieure (4132) du corps (4131) du porte-satellites (413) ; et
un stator (422) agencé autour du rotor (421), dans lequel le stator (422) comprend un noyau de stator (4221) et un enroulement (4222), et dans lequel le stator (422) entoure le rotor (421).

3. Agencement d'entraînement (1) selon la revendication 2, dans lequel le rotor (421) comprend une pluralité d'aimants permanents (4211) installés sur la surface diamétrale extérieure (4132) du corps (4131) du porte-satellites (413).

4. Agencement d'entraînement (1) selon la revendication 2, dans lequel le rotor (421) comprend une pluralité d'enroulements agencés sur la surface diamétrale extérieure (4132) du corps (4131) du porte-satellites (413).

5. Agencement d'entraînement (1) selon la revendication 1, dans lequel la boîte à engrenages à arbre intermédiaire (41) comprend :
une roue solaire d'entrée (411) reliée à l'arbre d'entrée (3) ;
deux ou plusieurs arbres de roue satellite composée (412), chacun ayant un premier étage d'engrenage (4121), engrené avec la roue solaire d'entrée (411), et un second étage d'engrenage (4122) ; et
une roue satellite de sortie (414), reliée à l'arbre de sortie (5), et engrenée avec le second étage d'engrenage (4122) de chaque arbre de roue satellite composée (412) ;
dans lequel le corps (4131) du porte-satellites (413) loge en son sein la roue solaire d'entrée (411), les arbres de roue satellite composée (412) et la roue satellite de sortie (414) ; et
dans lequel chaque arbre de roue satellite composée (412) pivote autour du boîtier (4131) du porte-satellites (413).

6. Agencement d'entraînement (1) selon la revendication 1, comprenant une unité de commande (7) reliée de manière fonctionnelle à l'unité de moteur-générateur à rapport de vitesse (42) et conçue pour commander le fonctionnement de l'unité de moteur-générateur à rapport de vitesse (42) pour ajuster le rapport de vitesse de transmission de la boîte à engrenages à arbre intermédiaire (41),
dans lequel l'unité de commande (7) est mise en œuvre sous la forme d'un variateur de fréquence basse tension à front actif, comportant un ordinateur et/ou un système informatique en nuage et/ou un réseau informatique ou d'autres installations capables de traiter des données en exécutant des programmes informatiques appropriés.

7. Agencement d'entraînement (1) selon la revendication 6, dans lequel l'unité de commande (7) comprend :
un processeur (71) ;
un bus (72), auquel le processeur (71) est connecté ;
une base de données (73), connectée au bus (72), de manière à être accessible et commandée par le processeur (71) ;
une mémoire lisible par ordinateur (74), connectée au bus (72), de manière à être accessible et commandée par le processeur (71) ; et
un module de réception-émission (75), connecté au bus (72), configuré pour recevoir les signaux de l'unité de moteur-générateur à rapport de vitesse (42) et de l'unité de moteur-générateur d'équilibrage de puissance (6), et transmettre des signaux de commande à l'unité de moteur-générateur à rapport de vitesse (42) et de l'unité de moteur-générateur d'équilibrage de puissance (6), pour faire fonctionner ceux-ci et coordonner le fonctionnement de l'ensemble d'entraînement (1).

8. Agencement d'entraînement (1) selon la revendication 6,
dans lequel l'unité de commande (7) est connectée à un réseau électrique (N) ou à des blocs-batteries, et
dans lequel l'unité de moteur-générateur à rapport de vitesse (42) est conçue pour fonctionner en guise de générateur électrique ou moteur électrique, pour ajuster la vitesse du porte-satellites (413), pour ainsi absorber au moins une partie de la puissance transmise au porte-satellites (413), afin de générer un courant électrique à injecter dans le réseau électrique (N) ou dans des blocs-batteries, ou pour absorber de la puissance électrique provenant du réseau électrique (N) ou des blocs-batteries pour fournir de la puissance au porte-satellites (413) de la boîte à engrenages à arbre intermédiaire (41).

9. Agencement d'entraînement (1) selon la revendication 6, comprenant une unité de moteur-générateur d'équilibrage de puissance (6), associée fonctionnellement à l'arbre de sortie (5), et reliée à l'unité de commande (7),
dans lequel l'unité de moteur-générateur d'équilibrage de puissance (6) est conçue pour maintenir les sources de puissance (2) travaillant dans leurs conditions de rendement maximal, permettant ainsi un équilibrage de puissance basé sur la disponibilité et le coût de l'énergie, et permettant le stockage d'énergie électrique dans des systèmes de batteries pour constituer une réserve tournante.

10. Agencement d'entraînement (1) selon la revendication 9, dans lequel l'unité de moteur-générateur d'équilibrage de puissance (6) comprend :
un rotor (61), installé sur une surface diamétrale extérieure de l'arbre de sortie (5) ; et
un stator (62) agencé autour du rotor (61), dans lequel le stator (62) comprend un noyau de stator (621) et un enroulement (622), et dans lequel le stator (62) entoure le rotor (61).

11. Agencement d'entraînement (1) selon la revendication 10, dans lequel le rotor (61) comprend une pluralité d'aimants permanents (611) installés sur la surface diamétrale extérieure de l'arbre de sortie (5).

12. Agencement d'entraînement (1) selon la revendication 10, dans lequel le rotor (61) comprend une pluralité d'enroulements agencés sur la surface diamétrale extérieure de l'arbre de sortie (5).

13. Système de train (T) comprenant :
un agencement d'entraînement (1) selon l'une quelconque des revendications 1 à 9 ;
une source de puissance (2), reliée à l'arbre d'entrée (3) de l'agencement d'entraînement (1) ; et
une charge (L) reliée à l'arbre de sortie (5) de l'agencement d'entraînement (1).

14. Système de train (T) selon la revendication 13, dans lequel la charge (L) est un compresseur, une pompe ou une hélice de navire.

15. Système de train (T) selon la revendication 13, dans lequel la source de puissance (2) est une turbine à gaz à arbre unique, et/ou une turbine à gaz à double arbre, et/ou une turbine à vapeur, et/ou un détendeur, et/ou un moteur électrique, et/ou un moteur diesel, et/ou un moteur à gaz.
